# EUROPEAN PATENT APPLICATION

(11) **EP 3 024 219 A1**
(43) Date of publication of application: **25.05.2016**
(21) Application number: 14306836.9
(22) Date of filing: 19.11.2014
(51) Int. Cl.: H04N 5/44, H04N 21/25, H04N 21/45, H04N 21/439, H04N 21/433

(54) **Television tuner, method and computer program product**

(71) Applicant: ALCATEL LUCENT, 92100 Boulogne-Billancourt (FR)
(72) Inventor: Rajapandiyan, Karthick, 600096 Chennai (IN); Pandurangan, Harikumar, 600096 Chennai (IN); Govindaraju, Sivarajan, 600096 Chennai (IN)
(74) Representative: Bryers LLP

(57) **Abstract**

A television tuner comprising a digital television processor operable to receive a digital television transmission including multiple digital components for output as an audio-visual television signal, and a first user input signal, wherein the digital television processor is operable, in response to the first user input signal, to disable an audio component of the audio-visual signal, and generate an action trigger signal after a first predetermined period of time from receipt of the first user input signal.

## Description

### TECHNICAL FIELD

Aspects relate, in general, to a television tuner, a method and a computer program product.

### BACKGROUND

When watching television, an audio component of an audio-visual signal representing a broadcast for use with a television apparatus can be disabled or muted by a user. Typically, a user will mute a broadcast if there is an interruption such as a received telephone call that has to be attended to without any sound disturbances, or if there are commercial breaks that the user does not wish to listen to, and so on.

If, for example, a received telephone call conversation is important/interesting then there is a reasonable chance that the conversation may go on for a long time and thus the user may get distracted from the television broadcast, perhaps forgetting that the broadcast has been muted, which may particularly be the case in the event that the user moves to a different room for example.

### SUMMARY

According to an example, there is provided a television tuner comprising a digital television processor operable to receive: a digital television transmission including multiple digital components for output as an audio-visual television signal, and a first user input signal, wherein the digital television processor is operable, in response to the first user input signal, to: disable an audio component of the audio-visual signal, and generate an action trigger signal after a first predetermined period of time from receipt of the first user input signal. The action trigger signal can be transmitted to a receiver of a television apparatus and is operable to disable the television apparatus, or trigger the television apparatus to enter a low power mode on receipt of the action trigger signal. The action trigger signal can be a reminder signal comprising data representing a reminder for the user for display in a screen-in-screen display portion of a television apparatus operable to receive the audio-visual television signal and the action trigger signal from the television tuner, the reminder to prompt the user to enable the audio component of the audio-visual signal. The action trigger signal can be transmitted to user equipment after the first predetermined period of time, whereby to provide a reminder message on the user equipment to remind the user to enable the audio component of the audio-visual signal. The digital television processor can generate a record signal to be transmitted to recording apparatus operable to store data representing the audio-visual television signal. The digital television processor can transmit the record signal as or after the audio component of the audio-visual signal is disabled, whereby to enable the data representing the audio-visual television signal to be stored from the time that the audio component is disabled. The digital television processor can generate a stop signal to be transmitted to the recording apparatus upon receipt, at the digital television processor, of a user input signal operable to cause the audio component of the audio-visual signal to be enabled. The action trigger signal can be a reminder signal comprising data representing a reminder for the user for display at the television apparatus operable to receive the audio-visual television signal from the television tuner, wherein the digital television processor can receive further user input in response to the reminder and, in response to the further user input, provide the stored data representing the audio-visual television signal for display using the display, or disable the television apparatus. The record signal can be transmitted after the first predetermined period of time.

According to an example, there is provided a method for triggering an action in response to disabling or muting an audio component of an audio-visual television signal of a digital television transmission received at a television tuner, the method comprising disabling the audio component of the audio-visual signal in response to receipt of a first user input signal at a digital television processor of the television tuner, and generating an action trigger signal after a first predetermined period of time from receipt of the first user input signal. The action trigger signal can be transmitted or otherwise provided to a receiver of a television apparatus, whereby to disable the television apparatus, or trigger the television apparatus to enter a low power mode on receipt of the action trigger signal. The action trigger signal can be a reminder signal comprising data representing a reminder for the user, the method further including receiving the reminder signal at a television apparatus operable to receive the audio-visual television signal, and displaying the reminder in a screen-in-screen display portion of the television apparatus. A record signal for transmission from the television tuner to a recording apparatus operable to store data representing the audio-visual television signal can be used. Transmitting the action trigger signal to a television apparatus operable to receive the audio-visual television signal can include, on receipt of the action trigger signal, generating and displaying a prompt for the user using the television apparatus, receiving user input at the television tuner, and in response to the user input, enabling the audio component, or extending a period of time by which the audio component is disabled by a predetermined amount.

According to an example, there is provided a computer program product, comprising a computer usable medium having computer readable program code embodied therein, said computer readable program code adapted to be executed to implement a for triggering an action in response to disabling or muting an audio component of an audio-visual television signal of a digital television transmission received at a television tuner as provided herein.

### BRIEF DESCRIPTION OF THE DRAWINGS

Embodiments will now be described, by way of example only, with reference to the accompanying drawings, in which:
Figure 1 is a schematic representation of a system according to an example;
Figure 2 is a schematic representation of a system according to an example; and
Figure 3 is a schematic representation of a process according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

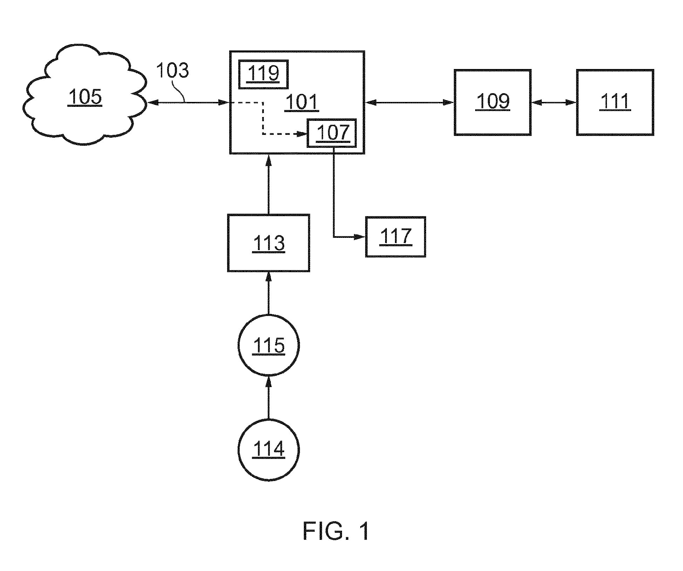

Figure 1 is a schematic representation of a system according to an example. A television tuner 101 receives an audio-visual television signal 103 from a content provider 105 in the form of a digital television transmission or broadcast. In an example, the signal 103 is a digital signal comprising multiple components including audio component(s) and visual component(s) for a broadcast. The television tuner 101 includes a digital television processor 107 operable to receive the transmission. The processor 107 can render the signal 103 for output using a television apparatus 109. For example, apparatus 109 can include, as is typical, a main display portion for display of a broadcast picture for an end user derived from the or each visual component of the television signal, and can include or be coupled to an audio output device 111 for output of audio for the transmission provided by the or each audio component. Respective different audio components, if present, can be output using multiple different audio output devices, such as in the case of a surround sound or similar system for example.

The digital television processor 107 is operable to receive a first user input signal 113 from a user 114. The input signal 113 can be provided by way of a remote control device 115 for example, which may be a convention type remote control such as an infra red device for example, or which may be a smart device, such as a smart phone with a dedicated application to enable control of the device 101 and/or 109 and/or 111.

According to an example, in response to receipt of the input signal 113, the digital television processor is operable to disable an audio component of the audio-visual signal 103, and generate an action trigger signal 117 after a first predetermined period of time from receipt of the first user input signal.

In an example, in the event of multiple audio components to a signal 103, the processor can disable one or more or the components.

Disabling an audio component can include not transmitting the audio component from the tuner device 101 to apparatus 109, and thus device 111, so that the audio component effectively cannot be output. Alternatively, a signal can be transmitted from the tuner 101 to apparatus 109 with the signal 103 to prevent the apparatus from outputting the or each audio component using device 111. That is, in response to receipt of the input signal 113, the or each audio component of the signal 103 is effectively muted. In an example, muting includes reducing the audible level of an audio component to an inaudible level, or other selected level such as by reducing the output level of an audio component by some factor so that it is still audible but perhaps only barely so. A visual component of a broadcast can still be displayed, as is customary, and the apparatus 109 can display a graphical item or provide some other suitable indication (e.g. a light, or an indication on another device such as a smartphone that can be communicated with from apparatus 101 or 109 over a Wifi or a short range radio frequency network and so on) to indicate that the audio is muted or disabled for example.

A timer function of processor 107 can be triggered on receipt of the user input signal 113. The timer function can be set to time a first predetermined period of time, after which processor 107 can generate and output signal 117. For example, on receipt of signal 113, processor can generate and transmit signal 117 after an elapsed period of 5 minutes. In an example, the first predetermined period of time can be any time in the range 1s to 1 hour or more, although it will be appreciated that time periods outside of this range, particularly the upper end of the noted range, are equally as applicable.

According to an example, the action trigger signal 117 can be used to trigger or otherwise execute or implement one or more predefined actions. So, for example, one or more predefined actions can be triggered automatically after the first predefined time after muting an audio component (commonly referred to as muting the television 109). The following is a non-exhaustive list of some of the actions that can be automatically triggered on receipt of the action trigger signal 117:
- Auto Switch off the TV apparatus 109;
- Put the TV apparatus 109 into a sleep mode or low power consumption mode;
- provide a reminder in a second screen (Multi screen TV) of the apparatus 109 (for example, connected via Universal plug and play protocol (uPNP)) to unmute and view live broadcast, or view recorded material from the mute point (both video and audio together);
- Remind the user (for example, using an SMS reminder message) using user equipment associated with a registered mobile number linked to a home channel;
- In a multiscreen environment, generate and provide popup a message to remind a user that the apparatus 109 is muted, and optionally provide an option to snooze the reminder and extend the mute time for some more time;
- Always record a broadcast from a mute point up until an unmute point throughout the program, and optionally trigger a popup reminder or similar on the display of the apparatus 109 to preview the recorded material after a particular program is completed or during switch off the TV;
- If there are users using wireless headphones as an audio output device 111 to hear the TV audio then the mute action can mute a TV apparatus 109 main speaker and not the wireless headphone. This is useful in places where multiple users are watching the same TV and some paired with wireless for sound and language selection.
- When unmuting with trigger to view the telecast from mute point to unmute point in Picture in Picture and "Go Live" in Full screen.

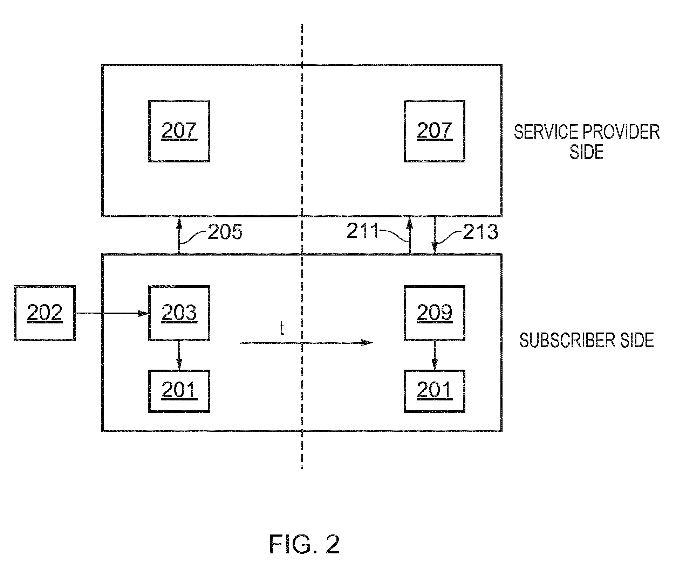

Figure 2 is a schematic representation of a system according to an example. A television tuner device 201 at a subscriber side (such as a user's home for example) can receive a mute request 203 from the user, for example using a device 202 such as a remote control or other suitable apparatus capable of communicating with device 201. In an example, device 201 can transmit a signal 205 to a service provider side device 207 so as cause recording of a television signal or to log the temporal position in a broadcast at which the user mutes the broadcast.. In an example, the mute signal 203 triggers a record signal 205 operable to cause a television signal to be recorded at a device 207. After a time, t, the user may decide to unmute. Accordingly, an unmute signal 209 can be received at device 201. In response to signal 209, device 201 can transmit a signal 211 to device 207 to cause recording to cease, and to cause device 207 to transmit recorded material 213 to device 201. In an example, the service provider domain can use the temporal position to determine the point at which pre-recorded or stored material can be provided to device 201. In an example, an action trigger signal, as described above, can be used to cause the recorded material to be provided to device 201, and the user can be prompted to select viewing of recorded or pre-recorded material or to continue with the broadcast from either the point of unmute or the point at which the action trigger signal causes a prompt to be displayed for the user asking for their preference.

In an example, subscriber-based time-shifting can be based on a local storage device located in the subscriber domain (such as a STB for example). A network-based time-shift proposition, as described with reference to figure 2, is typically based on storage devices, such as hard drives for example, located in the service provider domain. The function to save the contents at the network side is also called network PVR (network personal video recorder, nPVR). This mechanism can be used if the subscriber side device has limited storage capabilities, such as a cell-phone, PDA, and other handheld device.

According to an example, recording can occur after a mute trigger action, and recording can occur locally in the subscriber domain, such as in a STB or using a hard or solid state disk drive for example, attached to the STB or else it can be recorded using a network recorder (nPVR) at the network (service provider side).

According to an example, an IPTV client can include a telephone number configured by a user and associated with user equipment, such as a mobile phone, of the user. The IPTV client can include an application that triggers after a predetermined period of time of a muting action to mute the sound component of a television signal, to transmit a message to the user equipment, such as using the short message service for example. An internet enabled IPTV or TV can be connected to the internet using wifi or via LAN cable or for example dongle to enable such a service. The short message service can also be triggered via a service provider's application, which does not require an internet connection for an IPTV or TV. For example, after a predetermined period of time of a muting action, the IPTV client can send a trigger signal to an IPTV server. The server can then compose and send an SMS to the mobile number that the user has registered/associated with his account. In an example, an SMS can be of any form. Transmission of an SMS over a mobile communications network or any over the top (OTT) based SMS communication system can be used.

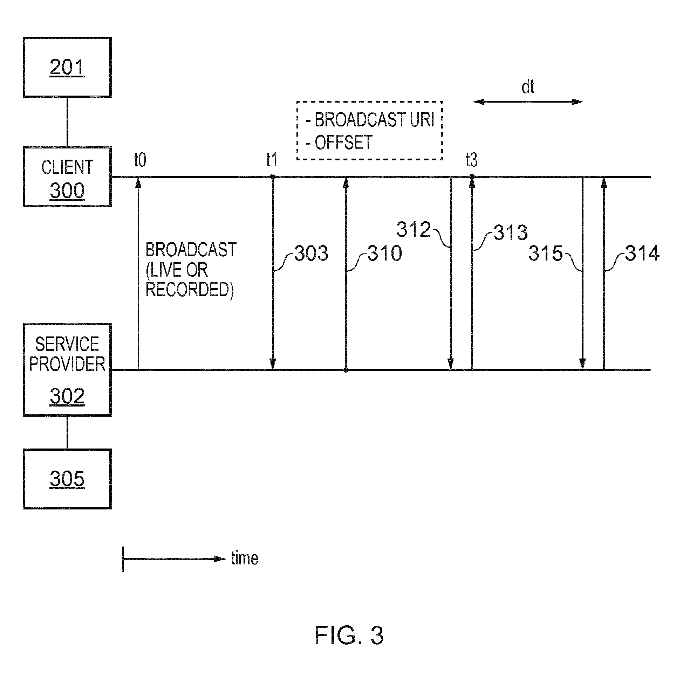

Figure 3 is a schematic representation of a process according to an example. A timeline at the client side 300, such as the device 201 of figure 2 for example, is shown for received and viewed digital television signals. A network or service provider side timeline 302 is shown for streams delivered for a device 201.

A television signal is received on the client side at a start time t0. At some later point, time t1, the user mutes an audio component of the signal. Muting at the time t1 causes a mute signal 303 to be transmitted by device 201 to a server or the like at network side 302. In an example, message 303 can be in the form of a request for a URI and an offset of the TV program, the URI pointing to a recorded version of the program in a media server 305 and the offset indicating the point in the television broadcast from muting where viewing can be resumed if desired, such as in response to an action trigger signal initiated prompt for the user and so on.

The network side 302 can send a response message 310 to the client side 300 including the URI of the program. The user can then resume viewing the broadcast using the recorded version of the broadcast from the point of the muting from the media server 305 at some later time t3 with data 313 representing the broadcast from the time t1. This can be in response to an unmute signal which can be used to cause a transmission 312 to the network side 302 indicating that the point at which recording can cease for example.

In an example, the broadcast can also be recorded from time t1 to time t3, or to time t3 plus a period of time which can be predetermined and relate to the generation and transmission of an action trigger signal as described above. That is, after unmute at time t3, an action trigger can be used to prompt the user for action at some predetermined period of time dt after t3. At this point, a recording or information for pre-recorded material 314, as noted above, can be provided to client side device 300, such as in response to a signal 315 from the client side 300 in response to an action trigger signal related activity.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A television tuner comprising:
a digital television processor operable to receive:
a digital television transmission including multiple digital components for output as an audio-visual television signal; and
a first user input signal, wherein the digital television processor is operable, in response to the first user input signal, to:
disable an audio component of the audio-visual signal; and
generate an action trigger signal after a first predetermined period of time from receipt of the first user input signal.

2. A television tuner as claimed in claim 1, wherein the action trigger signal is transmitted to a receiver of a television apparatus and is operable to disable the television apparatus, or trigger the television apparatus to enter a low power mode on receipt of the action trigger signal.

3. A television tuner as claimed in claim 1, wherein the action trigger signal is a reminder signal comprising data representing a reminder for the user for display in a screen-in-screen display portion of a television apparatus operable to receive the audio-visual television signal and the action trigger signal from the television tuner, the reminder to prompt the user to enable the audio component of the audio-visual signal.

4. A television tuner as claimed in any preceding claim, wherein the action trigger signal is transmitted to user equipment after the first predetermined period of time, whereby to provide a reminder message on the user equipment to remind the user to enable the audio component of the audio-visual signal.

5. A television tuner as claimed in any preceding claim, wherein the digital television processor is operable to generate a record signal to be transmitted to recording apparatus operable to store data representing the audio-visual television signal.

6. A television tuner as claimed in claim 5, wherein the digital television processor is operable to transmit the record signal as or after the audio component of the audio-visual signal is disabled, whereby to enable the data representing the audio-visual television signal to be stored from the time that the audio component is disabled.

7. A television tuner as claimed in claim 5 or 6, wherein the digital television processor is operable to generate a stop signal to be transmitted to the recording apparatus upon receipt, at the digital television processor, of a user input signal operable to cause the audio component of the audio-visual signal to be enabled.

8. A television tuner as claimed in any of claims 5 to 7, wherein the action trigger signal is a reminder signal comprising data representing a reminder for the user for display at the television apparatus operable to receive the audio-visual television signal from the television tuner, wherein the digital television processor is operable to receive further user input in response to the reminder and, in response to the further user input, provide the stored data representing the audio-visual television signal for display using the display, or disable the television apparatus.

9. A television tuner as claimed in claim 5, wherein the record signal is transmitted after the first predetermined period of time.

10. A method for triggering an action in response to disabling or muting an audio component of an audio-visual television signal of a digital television transmission received at a television tuner, the method comprising:
disabling the audio component of the audio-visual signal in response to receipt of a first user input signal at a digital television processor of the television tuner; and
generating an action trigger signal after a first predetermined period of time from receipt of the first user input signal.

11. A method as claimed in claim 10, further including transmitting the action trigger signal to a receiver of a television apparatus, whereby to disable the television apparatus, or trigger the television apparatus to enter a low power mode on receipt of the action trigger signal.

12. A method as claimed in claim 10 or 11, wherein the action trigger signal is a reminder signal comprising data representing a reminder for the user, the method further including:
receiving the reminder signal at a television apparatus operable to receive the audio-visual television signal; and
displaying the reminder in a screen-in-screen display portion of the television apparatus.

13. A method as claimed in any of claims 10 to 12, further including generating a record signal for transmission from the television tuner to a recording apparatus operable to store data representing the audio-visual television signal.

14. A method as claimed in any of claims 10 to 13, further comprising:
transmitting the action trigger signal to a television apparatus operable to receive the audio-visual television signal;
on receipt of the action trigger signal, generating and displaying a prompt for the user using the television apparatus;
receiving user input at the television tuner; and
in response to the user input, enabling the audio component, or extending a period of time by which the audio component is disabled by a predetermined amount.

15. A computer program product, comprising a computer usable medium having computer readable program code embodied therein, said computer readable program code adapted to be executed to implement a for triggering an action in response to disabling or muting an audio component of an audio-visual television signal of a digital television transmission received at a television tuner as claimed in any of claims 10 to 14.

## Amended claims

### Amended claims in accordance with Rule 137(2) EPC.

1. A system comprising:
a digital television processor (107) being configured to receive:
a digital television transmission including multiple digital components for output as an audio-visual television signal (103); and
a first user input signal (113), wherein the digital television processor (107) is configured, in response to the first user input signal (113), to:
disable an audio component of the audio-visual signal (103) whilst maintaining a visual component of the audio-visual signal (103); and
generate an action trigger signal (117) after a first predetermined period of time from receipt of the first user input signal (113), wherein the action trigger signal (117) is transmitted to a receiver of a television apparatus (109) and is operable to disable the television apparatus, or trigger the television apparatus to enter a low power mode, or wherein the action trigger signal is a reminder signal comprising data representing a reminder for the user for display in a screen-in-screen display portion of a television apparatus being configured to receive the audio-visual television signal and the action trigger signal from the television tuner, the reminder being configured to prompt the user to enable the audio component of the audio-visual signal.

2. A system as claimed in any preceding claim, wherein the action trigger signal (117) is transmitted to user equipment after the first predetermined period of time, whereby to provide a reminder message on the user equipment to remind the user to enable the audio component of the audio-visual signal.

3. A system as claimed in any preceding claim, wherein the digital television processor (107) is operable to generate a record signal to be transmitted to recording apparatus operable to store data representing the audio-visual television signal.

4. A system as claimed in claim 3, wherein the digital television processor (107) is operable to transmit the record signal as the audio component of the audio-visual signal is disabled, whereby to enable the data representing the audio-visual television signal to be stored from the time that the audio component is disabled.

5. A system as claimed in claim 3 or 4, wherein the digital television processor (107) is operable to generate a stop signal to be transmitted to the recording apparatus upon receipt, at the digital television processor, of a user input signal operable to cause the audio component of the audio-visual signal to be enabled.

6. A system as claimed in any of claims 3 to 5, wherein the action trigger signal (117) is a reminder signal comprising data representing a reminder for the user for display at the television apparatus (109) operable to receive the audio-visual television signal from the television tuner, wherein the digital television processor (107) is operable to receive further user input in response to the reminder and, in response to the further user input, provide the stored data representing the audio-visual television signal for display using the display, or disable the television apparatus.

7. A system as claimed in claim 3, wherein the record signal is transmitted after the first predetermined period of time.

8. A method for triggering an action in response to disabling or muting of an audio component of an audio-visual television signal of a digital television transmission received at a television tuner, the method comprising:
disabling the audio component of the audio-visual signal in response to receipt of a first user input signal at a digital television processor of the television tuner, whilst maintaining a visual component of the audio-visual signal; and
generating an action trigger signal after a first predetermined period of time from receipt of the first user input signal;
transmitting the action trigger signal to a receiver of a television apparatus whereby to disable the television apparatus or trigger the television apparatus to enter a low power mode or display a reminder in a screen-in-screen display portion of a television apparatus whereby to prompt the user to enable the audio component of the audio-visual signal.

9. A method as claimed in claim 8, wherein the action trigger signal is a reminder signal comprising data representing a reminder for the user, the method further including:
receiving the reminder signal at the television apparatus.

10. A method as claimed in claim 8 or 9, further including generating a record signal for transmission from the television tuner to a recording apparatus operable to store data representing the audio-visual television signal.

11. A method as claimed in any of claims 8 to 10, further comprising:
transmitting the action trigger signal to a television apparatus operable to receive the audio-visual television signal;
on receipt of the action trigger signal, generating and displaying a prompt for the user using the television apparatus;
receiving user input at the television tuner; and
in response to the user input, enabling the audio component, or extending a period of time by which the audio component is disabled by a predetermined amount.

12. A computer program product, comprising a computer usable medium having computer readable program code embodied therein, said computer readable program code adapted to be executed to implement a method as claimed in any one of claims 8 to 11 for triggering an action in response to disabling or muting of an audio component of an audio-visual television signal.
